# EUROPÄISCHE PATENTANMELDUNG

(11) **EP 2 801 255 A1**
(43) Veröffentlichungstag der Anmeldung: **12.11.2014**
(21) Anmeldenummer: 14401053.5
(22) Anmeldetag: 06.05.2014
(51) Int. Cl.: A01M 7/00, B05B 1/00

(54) **Ausbringleitung mit Düsenkörper bei Feldspritzen**

(30) Priorität: 08.05.2013 DE 102013104746
(71) Anmelder: Amazonen-Werke H. Dreyer GmbH & Co. KG, 49205 Hasbergen (DE)
(72) Erfinder: Heitmeyer, Kilian, 49152 Bad Essen (DE)

(57) **Zusammenfassung**

Ausbringleitung mit Düsenkörper (5) bei Feldspritzen, wobei von der zumindest eine Leitungswand (2) aufweisenden Flüssigkeitsleitung in einem Abzweigungsbereich eine Zweigleitung (4) zu der zumindest einen Ausbringdüse (6) des Düsenkörpers (5) abzweigt, wobei der Abzweigleitung zumindest ein Absperrelement (7) aufweisendes Absperrventil (8) zugeordnet ist. Um in einfacher Weise die Ablagerung von sich in der Flüssigkeit befindlichen Partikeln in der Abzweigleitung und den dort angeordneten Bauteilen, wie Absperrventilen und Ausbringdüsen zumindest erheblich zu reduzieren, ist vorgesehen, dass der Abzweigbereich der Zweigleitung von der Flüssigkeitsleitung beabstandet zu dem tiefsten Bereich der Flüssigkeitsleitung angeordnet ist.

## Beschreibung

Die Erfindung betrifft eine Ausbringleitung mit Düsenkörper bei Feldspritzen gemäß des Oberbegriffes des Patentanspruches 1.

Eine derartige Ausbringleitung mit Düsenkörper bei Feldspritzen ist in der DE 10 2010 036 437 A1 beschrieben. Hier zweigt von der Flüssigkeitsleitung in einem Abzweigungsbereich eine Zweigleitung zu der zumindest einen Ausbringdüse des Düsenkörpers ab. Der Abzweigleitung ist zumindest ein Absperrelement aufweisendes Absperrventil zugeordnet. Der Abzweigbereich der Zweigleitung von der Flüssigkeitsleitung ist im tiefsten Bereich der Flüssigkeitsleitung angeordnet. Über die Flüssigkeitsleitung werden in Wasser gelöste Wirkstoffe ausgebracht. Die in dem Flüssigkeitsgemisch enthaltenen Wirkstoffpartikel sinken bei stehender Flüssigkeit oder langsam fliessenden Flüssigkeitsstrom nach unten aus der Flüssigkeit heraus und sammeln sich an der tiefsten Stelle der Flüssigkeitsleitung und lagern sich hier ab.

Über den Abzweigbereich gelangen die sich ablagernden Partikel in die Zweigleitung und von hier aus zu den Ausbringdüsen und den in der Abzweigleitung angeordneten Absperrelemente der Absperrventile. Diese Partikel behindern das Absperren der Abzweigleitung durch die Absperrelemente und verursachen ein Verstopfen der Ausbringdüsen.

Der Erfindung liegt die Aufgabe zu Grunde, in einfacher Weise die Ablagerung von sich in der Flüssigkeit befindlichen Partikeln in der Abzweigleitung und den dort angeordneten Bauteilen, wie Absperrventilen und Ausbringdüsen zumindest erheblich zu reduzieren.

Diese Aufgabe wird erfindungsgemäß dadurch gelöst, dass der Abzweigbereich der Zweigleitung von der Flüssigkeitsleitung beabstandet zu dem tiefsten Bereich der Flüssigkeitsleitung angeordnet ist.

Infolge dieser Maßnahme gelangen die sich im untersten Bereich der Zweigleitung ablagernden Wirkstoffpartikel nicht in den Abzweigbereich der Zweigleitung von der Flüssigkeitsleitung. Hierdurch wird die Wahrscheinlichkeit, dass diese Partikel nur in geringem Maße in die Abzweigleitung gelangen, wesentlich erhöht. Je weiter der Abzweigbereich von dem tiefsten Bereich der Flüssigkeitsleitung entfernt ist, umso weniger absinkender Partikel gelangen bei stehender Flüssigkeit oder langsam fließenden Flüssigkeitsstrom in die Abzweigleitung. Somit wird einem Verstopfen des Absperrventil oder der Ausbringdüsen wirksam entgegengewirkt.

Bereits erste Erfolge lassen sich dadurch erzielen, dass der Abzweigbereich der Zweigleitung von der Flüssigkeitsleitung um zumindest das 0,1-fache des Innendurchmessers der Flüssigkeitsleitung von dem tiefsten Bereich der Flüssigkeitsleitung beabstandet angeordnet ist.

Eine weitere Verbesserung dahingehend, dass sich möglichst wenig Wirkstoffpartikel in der Abzweigleitung ablagern und dort zu Behinderungen oder Verstopfungen führen, wird dadurch erreicht, dass der Abzweigbereich der Zweigleitung von der Flüssigkeitsleitung zumindest annähernd auf halber Höhe der Flüssigkeitsleitung angeordnet ist.

Eine weitere Verbesserung des erfindungsgemäßen Zieles, ergibt sich dadurch, dass der Abzweigbereich der Zweigleitung von der Flüssigkeitsleitung in der oberen Hälfte der Flüssigkeitsleitung angeordnet ist.

Eine besonders optimale Lage des Abzweigbereich wird im Hinblick auf die erfindungsgemäße Aufgabe dadurch erreicht, dass der Abzweigbereich der Zweigleitung von der Flüssigkeitsleitung zumindest annähernd im oberen oder zumindest annähernd im obersten Bereich der Flüssigkeitsleitung angeordnet ist.

Weitere Einzelheiten der Erfindung sind der Beispielsbeschreibung zu entnehmen. Die Zeichnungen zeigen
- Fig.1: die Lage des Abzweigbereiches einer Abzweigleitung mit zugeordnetem Absperrventil im untersten Bereich der Flüssigkeitsleitung in Prinzipdarstellung und im Schnitt nach dem Stand der Technik,
- Fig.2: die Lage des Abzweigbereiches einer Abzweigleitung mit zugeordnetem Absperrventil mit Abstand zum untersten Bereich der Flüssigkeitsleitung in Prinzipdarstellung und im Schnitt,
- Fig.3: die Lage des Abzweigbereiches einer Abzweigleitung mit zugeordnetem Absperrventil im mittleren Bereich der Flüssigkeitsleitung in Prinzipdarstellung und im Schnitt und
- Fig.4: die Lage des Abzweigbereiches einer Abzweigleitung mit zugeordnetem Absperrventil im obersten Bereich der Flüssigkeitsleitung in Prinzipdarstellung und im Schnitt.

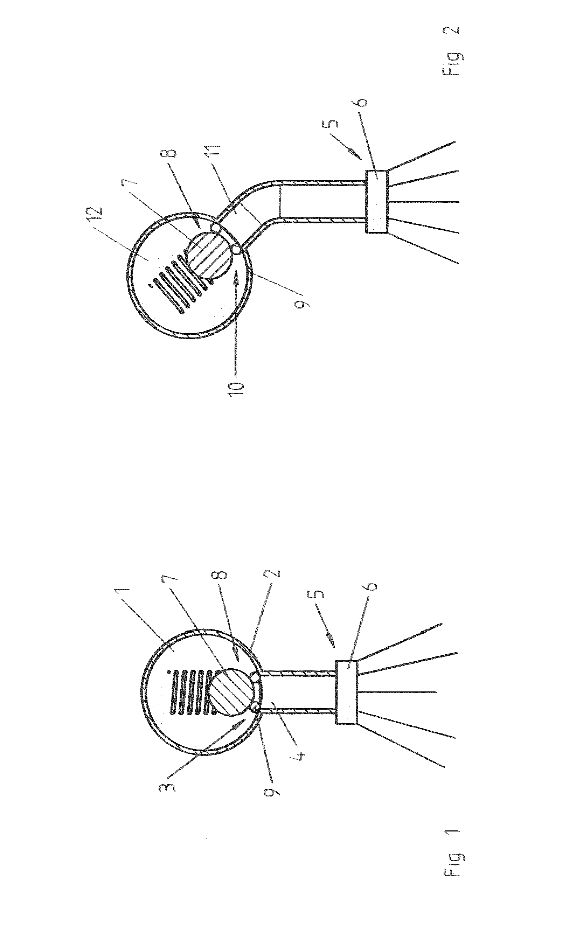

Die Ausbringleitung 1 ist an einem Verteilergestänge einer landwirtschaftlichen Feldspritze in bekannter und daher nicht näher dargestellter Weise angeordnet. Von der zumindest eine Leitungswand 2 aufweisenden Ausbringleitung 1 zweigen in bekannter und daher nicht näher dargestellter Weise in Abständen zueinander angeordneten Abzweigbereichen 3 mehrere Abzweigleitungen 4 ab. An den Enden dieser Abzweigleitungen 4 sind die der Ausbringleitung zugeordneten Düsenkörper 5 mit Ausbringdüsen 6 in bekannter Weise angeordnet, wie in der Zeichnung schematisch dargestellt ist. Dem Düsenkörper 5 und/oder der Abzweigleitung 4 ist zumindest ein federbelastetes Absperrelement 7 aufweisendes Absperrventil 8 zugeordnet. Das Absperrelement 7 ist mittels bekannter und daher nicht dargestellter Weise durch geeignete Betätigungsmittel von seinem Ventilsitz abzuheben, so dass der Durchfluss von der Ausbringleitung zu der Abzweigleitung frei gegeben ist. Bei der Ausbringleitung nach dem Stand der Technik gemäß Fig. 1 ist der Abzweigbereich 3 der Zweigleitung 4 von der als Flüssigkeitsleitung ausgebildeten Ausbringleitung 1 im tiefsten Bereich 9 der Flüssigkeitsleitung 1 angeordnet.

In dem auszubringenden Flüssigkeitsgemisch, welches über die Ausbringleitung 1 und der Abzweigleitung 4 der Ausbringdüse 6 zugeleitet wird, sind Wirkstoffpartikel des Pflanzenschutzmittels enthalten. Die Wirkstoffpartikel sinken bei stehendem Flüssigkeitsgemisch oder langsam fließendem Flüssigkeitsgemischstrom nach unten aus dem Flüssigkeitsgemisch heraus und sammeln sich an der tiefsten Stelle 9 der Flüssigkeitsleitung 1 und lagern sich hier, im Ausführungsbeispiel gemäß Fig. 1 im Abzweigbereich 3 und des Absperrelementes 7 des Absperrventiles 8 ab. Dies führt zu Behinderungen der Funktionsweise des Absperrelementes 7 des Absperrventiles 8. Außerdem gelangen in verstärktem Maße die sich ablagernden Wirkstoffpartikel zu den Ausbringdüsen 6 und verstopfen diese.

Die Anordnung des Abzweigbereiches 10 der Zweigleitung 11 von der Flüssigkeitsleitung 12 gemäß des Ausführungsbeispiels nach der Fig. 2 unterscheidet sich von dem Ausführungsbeispiel gemäß Fig. 1 dadurch, dass der Abzweigbereich 10 der Zweigleitung 11 von der Flüssigkeitsleitung 12 beabstandet zu dem tiefsten Bereich 9 der Flüssigkeitsleitung 12 angeordnet ist. Hierbei ist der Abzweigbereich 10 der Zweigleitung 11 von der Flüssigkeitsleitung 12 um zumindest das 0,1-fache des Innendurchmessers der Flüssigkeitsleitung 12 von dem tiefsten Bereich 9 der Flüssigkeitsleitung 12 beabstandet angeordnet ist.

In dem auszubringenden Flüssigkeitsgemisch, welches über die Ausbringleitung 1 über die Abzweigleitung 4 der Ausbringdüse zugeleitet wird, sind Wirkstoffpartikel des Pflanzenschutzmittels enthalten. Die Wirkstoffpartikel sinken bei stehendem Flüssigkeitsgemisch oder langsam fließendem Flüssigkeitsgemischstrom nach unten aus dem Flüssigkeitsgemisch heraus und sammeln sich an der tiefsten Stelle 9 der Flüssigkeitsleitung 12 und lagern sich hier, im Ausführungsbeispiel gemäß Fig. 2 etwas entfernt vom Abzweigbereich 3 und des Absperrelementes 7 des Absperrventiles 8 ab. Dies führt zu einer starken Verbesserung der Funktionsweise des Absperrelementes 7 des Absperrventiles 8 gegenüber der Anordnung nach Fig. 1. Außerdem gelangen nur noch im stark verminderten Maße die sich ablagernden Wirkstoffpartikel zu den Ausbringdüsen 6, so dass weitgehend eine Verstopfung der Düsen 6 vermieden wird.

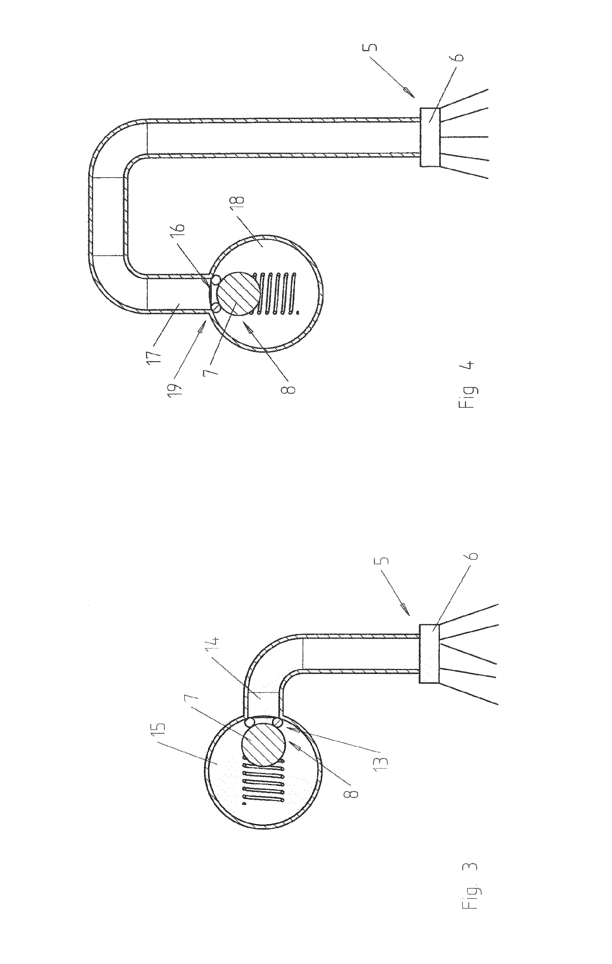

Die Anordnung des Abzweigbereiches 13 der Zweigleitung 14 von der Flüssigkeitsleitung 15 gemäß des Ausführungsbeispiels nach der Fig. 3 unterscheidet sich von dem Ausführungsbeispiel gemäß Fig. 2 dadurch, dass der Abzweigbereich 13 der Zweigleitung 14 von der Flüssigkeitsleitung 15 auf halber Höhe der Flüssigkeitsleitung 15 angeordnet ist. Dies führt zu einer weiteren Verbesserung der Funktionsweise des Absperrelementes 7 des Absperrventiles 8 gegenüber der Anordnung nach Fig. 2. Außerdem gelangen noch weniger sich ablagernde Wirkstoffpartikel zu den Ausbringdüsen 6, so dass eine Verstopfung der Düsen 6 weitgehend vermieden wird.

Die Anordnung des Abzweigbereiches 16 der Zweigleitung 17 von der Flüssigkeitsleitung 18 gemäß des Ausführungsbeispiels nach der Fig. 4 unterscheidet sich von dem Ausführungsbeispiel gemäß Fig. 3 dadurch, der Abzweigbereich 16 der Zweigleitung 17 von der Flüssigkeitsleitung 18 im obersten Bereich 19 der Flüssigkeitsleitung 18 angeordnet ist. Dies führt zu einer weiteren Verbesserung der Funktionsweise des Absperrelementes 7 des Absperrventiles 8 gegenüber der Anordnung nach Fig. 3. Somit gelangen bei stehendem Flüssigkeitsgemisch oder langsam fließendem Flüssigkeitsgemischstrom keine Wirkstoffpartikel zu den Ausbringdüsen 6, so dass eine Verstopfung der Düsen 6 vermieden wird.

## Patentansprüche

1. Ausbringleitung mit Düsenkörper bei Feldspritzen, wobei von der zumindest eine Leitungswand aufweisenden Flüssigkeitsleitung in einem Abzweigungsbereich eine Zweigleitung zu der zumindest einen Ausbringdüse des Düsenkörpers abzweigt, wobei der Abzweigleitung zumindest ein Absperrelement aufweisendes Absperrventil zugeordnet ist, **dadurch gekennzeichnet, dass** der Abzweigbereich (10,13, 16) der Zweigleitung (11, 14, 17) von der Flüssigkeitsleitung (12, 15, 16, 18) beabstandet zu dem tiefsten Bereich (9) der Flüssigkeitsleitung (12, 15, 18) angeordnet ist.

2. Ausbringleitung nach Anspruch 1, **dadurch gekennzeichnet, dass** der Abzweigbereich (10,13, 16) der Zweigleitung (11, 14, 17) von der Flüssigkeitsleitung (12, 15, 18) um zumindest das 0,1-fache des Innendurchmessers der Flüssigkeitsleitung (12, 15, 18) von dem tiefsten Bereich (9) der Flüssigkeitsleitung (12, 15, 18) beabstandet angeordnet ist.

3. Ausbringleitung nach einem oder mehreren der vorstehenden Ansprüche, **dadurch gekennzeichnet, dass** der Abzweigbereich (13) der Zweigleitung (14) von der Flüssigkeitsleitung (15) zumindest annähernd auf halber Höhe der Flüssigkeitsleitung (15 angeordnet ist.

4. Ausbringleitung nach einem oder mehreren der Ansprüche 1 bis 3, **dadurch gekennzeichnet, dass** der Abzweigbereich (16) der Zweigleitung (17) von der Flüssigkeitsleitung (15) in der oberen Hälfte der Flüssigkeitsleitung (15) angeordnet ist.

5. Ausbringleitung nach einem oder mehreren der Ansprüche 1 bis 3, **dadurch gekennzeichnet, dass** der Abzweigbereich (16) der Zweigleitung (17) von der Flüssigkeitsleitung (18) zumindest annähernd im oberen Bereich der Flüssigkeitsleitung (18) angeordnet ist.

6. Ausbringleitung nach Anspruch 5, **dadurch gekennzeichnet, dass** der Abzweigbereich (16) der Zweigleitung (17) von der Flüssigkeitsleitung (18) zumindest annähernd im obersten Bereich (19) der Flüssigkeitsleitung (18) angeordnet ist.
